# EUROPÄISCHE PATENTSCHRIFT

(11) **EP 0 589 374 B1**
(45) Veröffentlichungstag und Bekanntmachung des Hinweises auf die Patenterteilung: **11.06.1997**
(21) Anmeldenummer: 93115050.2
(22) Anmeldetag: 18.09.1993
(51) Int. Cl.: H02H 7/08, H02H 3/46

(54) **Verfahren und Vorrichtung zur überwachung eines alternierenden Signals**
Method and appliance for monitoring an alternating signal
Procédé et dispositif pour contrôler un signal alternatif

(30) Priorität: 21.09.1992 DE 4231611
(43) Veröffentlichungstag der Anmeldung: 30.03.1994
(73) Patentinhaber: DEUTSCHE THOMSON-BRANDT GMBH, 78048 Villingen-Schwenningen (DE)
(72) Erfinder: Gleim, Günter, D-78052 Villingen-Schwenningen (DE); Link, Hermann, D-78052 Villingen-Schwenningen (DE); Heizmann, Friedrich, D-78052 Villingen-Schwenningen (DE)

(56) Entgegenhaltungen:
- DE-A- 1 962 828
- DE-U- 9 102 562
- US-A- 3 483 455

## Beschreibung

Die vorliegende Erfindung betrifft ein Verfahren zur Überwachung eines alternierenden Signales gemäß dem Oberbegriff des Anspruchs 1 und eine Vorrichtung gemäß dem Oberbegriff des Anspruchs 6.

Die Verwendung von Stufen, die ein alternierendes Signal abgeben, das zur Steuerung einer angeschlossenen Stufe dient, ist allgemein bekannt. Derartige Steuerstufen können beispielsweise einen Mikroprozessor enthalten, der ein alternierendes Signal in Form eines digitalen Signales abgibt und damit eine angeschlossene Stufe steuert. Es sind auch Oszillatoren bekannt, die ein sinusförmiges, rechteckförmiges oder sonstiges alternierendes Signal zur Verarbeitung weiterer Signale durch entsprechende Stufen verwenden.

Es sind verschiedene Möglichkeiten denkbar, daß das von einer Steuerstufe der genannten Art abgegebene alternierende, im weiteren auch wechselnde, Signal seinen Verlauf ändert. So kann es beispielsweise zu einer Potentialverschiebung dadurch kommen, daß dem wechselnden Signal eine Gleichspannung überlagert wird. Es ist weiterhin möglich, daß sich das Tastverhältnis des wechselnden Signales ändert. Derartige Änderungen können, je nach Gerät, in dem die Steuerstufe verwendet wird und/oder nach Betriebszustand, gewollt sein oder auf einen Fehler der Steuerstufe hinweisen.

Es ist die Aufgabe der vorliegenden Erfindung, den Zustand eines alternierenden Signales auf einfache Weise zu überwachen.

Diese Aufgabe wird gelöst durch ein Verfahren nach dem Anspruch 1 und durch eine Vorrichtung gemäß Anspruch 6.

Erfindungsgemäß wird ein alternierendes Signal, das beispielsweise von einer Steuerstufe oder einem Oszillator erzeugt wird, derart aufbereitet, daß durch Vergleichen des aufbereiteten Signales mit Referenzwerten Signale erzeugt werden, die durch einfache Weise ausgewertet werden können.

Die Aufbereitung des wechselnden Signales kann beispielsweise dadurch erfolgen, daß dieses im wesentlichen geglättet wird. Der Wert des geglätteten Signales ist ein Maß für einen möglichen Gleichspannungsanteil und/oder für das Taktverhältnis des wechselnden Signales.

Eine andere Möglichkeit der Aufbereitung ist beispielsweise, das wechselnde Signal über einen Kondensator zu führen, der in Serie geschaltet ist zwischen einer das wechselnde Signal erzeugenden ersten Stufe und einer durch dieses Signal gesteuerten zweiten Stufe. Dabei wird die erste Seite des Kondensators, die mit der zweiten Stufe verbunden ist, mittels einer Spannungsquelle, einer Stromquelle oder dergleichen derart geladen, daß bei keinen oder nur geringen Änderungen des Potentials an der mit der ersten Stufe verbundenen zweiten Seite des Kondensators die erste Seite gemäß einem vorgegebenen zeitlichen Verlauf bestimmte Spannungswerte annimmt.

Es sei darauf hingewiesen, daß sowohl die zur Steuerung verwendeten alternierenden Signale, als auch von diesen abgeleitete Signale aufbereitet werden können.

Eine Veränderung des Tastverhältnisses und/oder des Gleichspannungsanteils des alternierenden Signals kann beispielsweise zur Steuerung einer angeschlossenen Stufe dienen oder auch auf eine Funktionsstörung hinweisen. So kann es beispielsweise bei einer Steuerstufe der genannten Art zu einem unkontrollierten Zustand kommen, in dem das Ausgangssignal der Steuerstufe einem Gleichspannungspegel einer positiven Betriebsspannung oder des Massepotentials entspricht. Das kann beispielsweise durch Induktionsspitzen oder dergleichen verursacht werden, die den Ablauf eines Steuerprogrammes beeinflussen, das zur Funktion der Steuerstufe dient. Denkbar ist ebenfalls, daß Elemente der Steuerstufe defekt werden, daß die Versorgungsspannung der Steuerstufe ausfällt, oder dergleichen.

In den genannten Fällen kommt es zu Fehlfunktionen der an die Steuerstufe angeschlossenen Stufen.

Es ist ein Vorteil der vorliegenden Erfindung, daß derartige Zustände auf einfache Weise erkannt werden können und daraufhin ein vorgegebener Zustand der angeschlossenen Stufen gesteuert werden kann.

Eine derartige Betriebsüberwachung kann beispielsweise bei einem Gerät, wie einem Videorekorder, verwendet werden, das ein Band antreibt, auf dem Informationen gespeichert und von dem Informationen ausgelesen werden können.

Weitere Merkmale, Vorteile und Einzelheiten der Erfindung werden in den folgenden Ausführungsbeispielen anhand der Zeichnung erläutert. Dabei zeigen:
- Fig. 1 :: das Blockschaltbild eines ersten Ausführungsbeiles;
- Fig. 2 :: Verläufe von Signalen im Ausführungsbeispiel der Fig. 1
- Fig. 3 :: das Blockschaltbild eines zweiten Ausführungsbeispieles;
- Fig. 4 :: Verläufe von Signalen im Ausführungsbeispiel der Fig. 3

Bevor auf die Beschreibung der Ausführungsbeispiele näher eingegangen wird, sei darauf hingewiesen, daß die in den Figuren einzeln dargestellten Blöcke lediglich zum besseren Verständnis der Erfindung dienen. üblicherweise sind einzelne oder mehrere dieser Blöcke zu Einheiten zusammengefaßt. Diese können in integrierter oder Hybridtechnik oder als programmgesteuerter steuerter Mikrorechner, bzw. als Teil eines zu seiner Steuerung geeigneten Programmes realisiert sein.

Die in den einzelnen Stufen enthaltenen Elemente können jedoch auch getrennt ausgeführt werden.

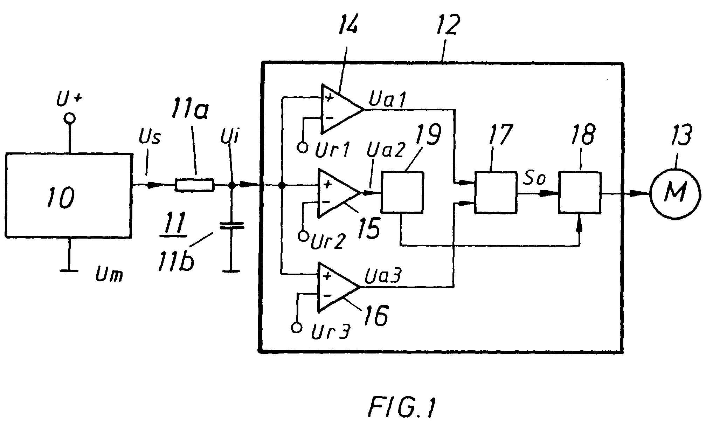

Fig. 1 zeigt ein elektronisches Steuergerät 10, das Steuersignale Us über eine Aufbereitungsstufe, die in diesem Ausführungsbeispiel als Glättungsglied 11 ausgebildet ist, zu einer Ansteuerstufe 12, leitet, die einen Motor 13 bestromt. Das Glättungsglied 11 besteht aus einem Widerstand 11a, dessen erster Anschluß mit dem Ausgang des Steuergerätes 10 verbunden ist, und einem Kondensator 11b, der zwischen dem zweiten Anschluß des Widerstandes 11a und Masse geschaltet ist. Das Glättungsglied 11 bewirkt eine Glättung des Steuersignals Us, wodurch ein Signal Ui gebildet wird. Dieses wird den nichtinvertierenden (+) Eingängen eines ersten Komparators 14, eines zweiten Komparators 15 und eines dritten Komparators 16 zugeführt. Die Komparatoren 14, 15, 16 sind mit ihren invertierenden (-) Eingängen mit einer ersten Referenzspannung Ur1, mit einer zweiten Referenzspannung Ur2 bzw. mit einer dritten Referenzspannung Ur3 verbunden. Die Ausganggsignale Ua1 und Ua3 der Komparatoren 14, 16 werden je zu einem Eingang eines EXCLUSIV-ODER-Gatters 17 geführt, dessen Ausgangssignal So weiteren Ansteuermitteln zugeführt wird, die den Motor 13 bestromen. Diese weiteren Ansteuermittel, die unter anderem eine Endstufe enthalten und Mittel, die das Signal So und ein Signal Ss einer Startstufe 19 auswerten und daraufhin die Endstufe wie unten beschrieben ansteuern, sind in Fig. 1 durch die Stufe 18 symbolisch dargestellt.

Das Ausgangssignal Ua2 des Komparators gelangt zu der Startstufe 19, deren Ausgangssignal Ss der Stufe 18 zugeführt wird.

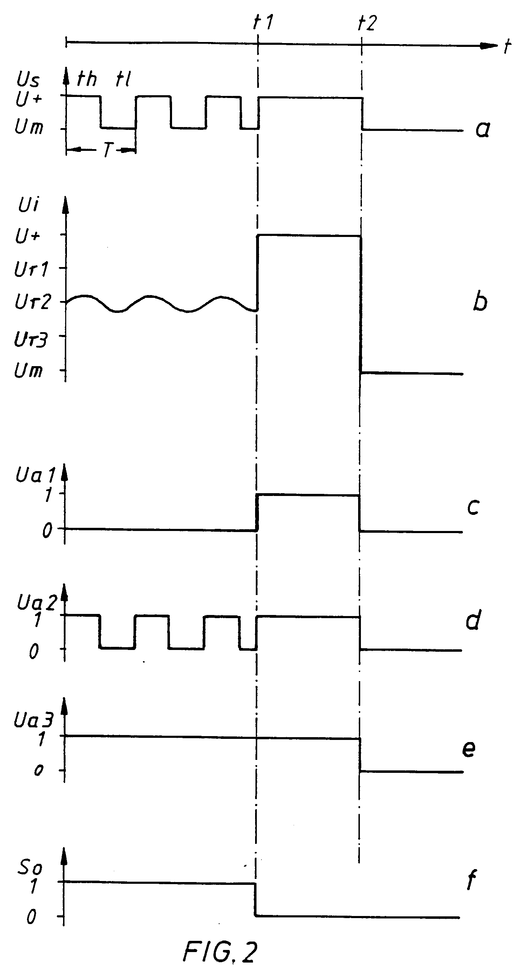

Im folgenden wird die Funktion des Ausführungsbeispiel der Fig. 1 mit Hilfe von Fig. 2 nur insoweit erläutert, wie es für das Verständnis der vorliegenden Erfindung erforderlich ist.

Um den Lauf des Motors 13 zu starten, gibt das Steuergerät 10 das getaktete Steuersignal Us ab, das zu einem geglätteten Signal Ui führt, wie es in den Figuren 2a und 2b im Zeitraum zwischen to und t1 dargestellt ist. Das Signal Ui weist eine Restwelligkeit auf, die zum besseren Verständnis etwas übertrieben eingezeichnet ist. In Figur 2b sind ebenfalls die Werte der Referenzspannungen Ur eingezeichnet. Die Komparatoren geben Signale Ua ab, wie es in den Figuren 2c) bis 2 e) gezeigt ist.

Zunächst wird ein Normalbetrieb, wie er während des Zeitraumes zwischen to und t1 vorliegt, betrachtet. Aufgrund des Signals Ui bildet der Komparator 15 das Ausgangssignal Ua2 mit einem Verlauf nach, der dem Takt des ursprünglichen Ausgangssignales Us mit einem Taktverhältnis th/tl während einer Periode T entspricht. Das Signal Ua1 ist "low", das heißt, es nimmt den digitalen Wert "0" an, und das Signal Ua2 ist "high", entsprechend dem Wert "1". Damit ist, wie aus Fig. 2 f erkennbar, das Ausgangssignal So des EX-ODER-Gatters 17 high, wodurch der Betrieb der Stufe 18 enthaltenen Endstufe nicht beeinträchtigt wird.

Das Signal Us dient in diesem Ausführungsbeispiel nicht nur zur Einleitung eines Motorstarts, sondern auch zur Betriebsüberwachung des Steuergerätes 10. Sollte es während des Betriebes zu einer Störung des Steuergerätes 10 kommen, wodurch es einen Betriebs-Spannungswert annimmt, was in diesem Ausführungsbeispiel U+ oder Masse sein kann, so ändert sich der Zustand des Signals So des Gatters 17 und damit die Ansteuerung der in Stufe 18 enthaltenen Endstufe.

Als nächstes sei ein erster möglicher Störungsbetrieb in dem Zeitraum zwischen t1 und t2 betrachtet, bei dem das Signal Us die positive Betriebsspannung U+ annimmt, wodurch auch Ua2 "high" wird. Da U+ größer ist sowohl als Ur1, als auch als Ur3, sind beide Signale Ua1, Ua3 "high" und das Signal So des Gatters 17 wird "low". Das bewirkt, daß die Stufe 18 den Motor 13 in vorgegebener Weise herunterfährt von einer momentanen Drehgeschwindigkeit auf eine Standby-Geschwindigkeit. Diese Standby-Geschwindigkeit kann beispielsweise den Stillstand des Motors 10 bedeuten.

Ein zweiter möglicher Störfall ist oberhalb der Zeit t2 dargestellt. Hier sollen die Signale Us und Ui den Wert des Massepotentials annehmen. Da dieses sowohl unterhalb von Ur1 als auch von Ur3 liegt, werden die Signale Ua1 und Ua3 "low". Damit ist auch So "low" und es wird der Standby-Betrieb beibehalten.

Die in Fig. 2 dargestellten Fälle stellen insofern eine Besonderheit dar, als daß erst der erste Störfall (t1-t2) und daran anschließend der zweite Störfall (nach t2) auftritt. Es ist natürlich möglich, daß das Signal Ui direkt nach dem Normalbetrieb auf Massepotential sinkt. Dann wird dadurch entsprechend der Standby-Betrieb eingeleitet, indem der Motor 13 heruntergefahren wird.

Bei der Beschreibung dieses Ausführungsbeispiels wurde zunächst davon ausgegangen, daß das Signal Us zwischen den beiden Werten U+, Um der Betriebsspannungen getastet wird. Es ist jedoch auch möglich, daß ein geringerer Hub für das Signal Us vorgesehen ist. In diesem Fall kann die Schaltung der Fig. 1 auch dazu verwendet werden, einen möglichen Gleichspannungsanteil des Signales Us festzustellen.

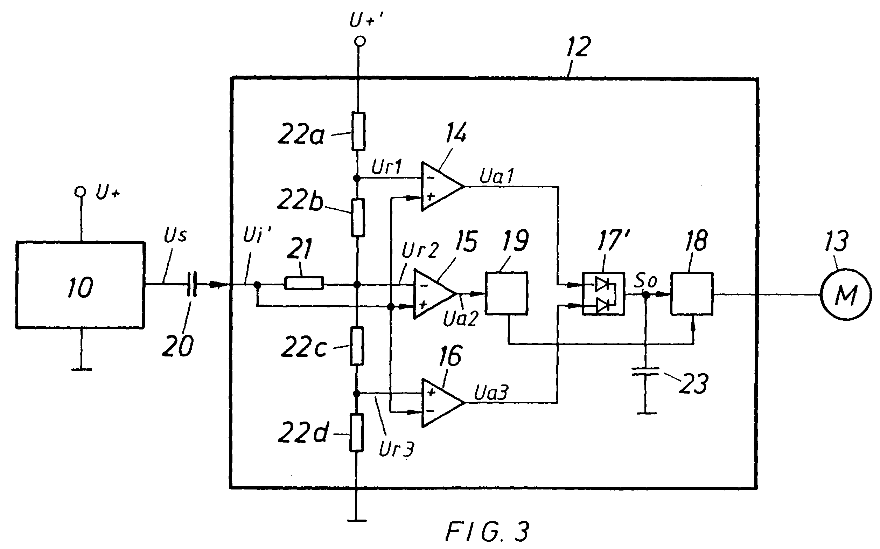

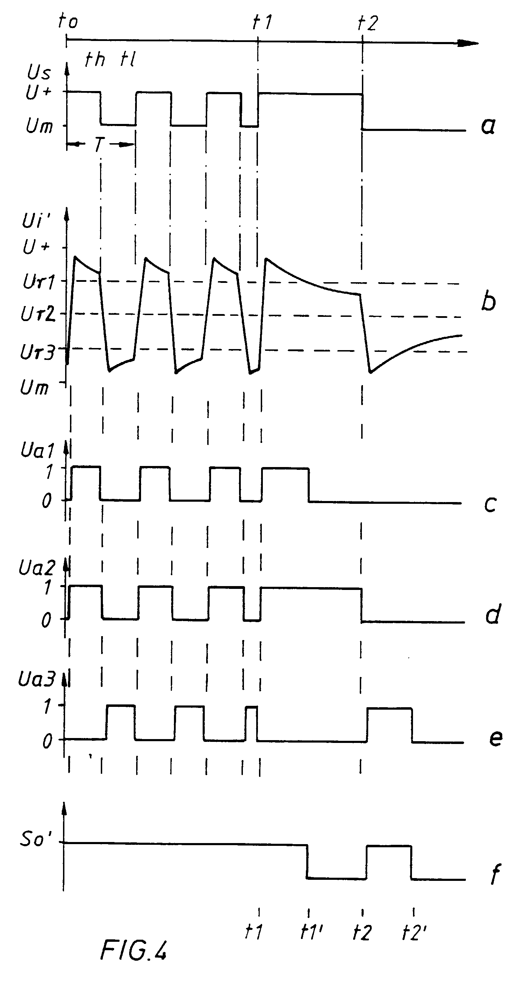

Das Blockschaltbild eines zweiten Ausführungsbeispiels ist in Fig. 3 dargestellt und wird mit Hilfe von Fig. 4 erläutert. Mittel und Signale mit einer analogen Funktion wie beim dem Ausführungsbeispiel der Fig. 1 bzw. Fig. 2 sind wie dort bezeichnet. Auf sie soll im folgenden nur insoweit eingegangen werden, wie es für das Verständnis der vorliegenden Erfindung wesentlich ist.

Der wesentliche Unterschied zu dem Ausführungsbeispiel der Fig. 1 liegt darin, daß eine andere Art der Aufbereitung des Signales Us erfolgt. Dieses wird nicht über das Glättungsglied 11 geführt, sondern über einen Kondensator 20, der mit einem Widerstand 21 in Serie geschaltet ist. Bei der Verbindung zwischen den Elemente 20, 21 wird ein Signal Ui' abgegriffen und den Komparatoren 14, 15, 16 zugeführt. Dabei gelangt das Signal Ui' bei den Komparatoren 14 und 15 jeweils an den nichtinvertierenden Eingang und bei dem Komparator 16 an den invertierenden Eingang. Der Widerstand 21 ist mit dem Mittenabgriff eines Spannungsteilers verbunden, der aus Widerständen 22, entsprechend 22a - 22d, gebildet wird und der zur Erzeugung der Referenzspannungen Ur1, Ur2, Ur3 dient, die jeweils an den freien Eingängen der Komparatoren 14 - 16 anliegen. Die Ausgangssignale Ua1 und Ua3 werden dem ODER-Gatter zugeführt, das hier mit 17' bezeichnet ist, da es in diesem Ausführungsbeispiel als "einfaches" ODER-Gatter ausgeführt sein kann, und nicht zwangsläufig ein EXCLUSIV-ODER GATTER sein muß. Bei einer bevorzugten Ausführungsform ist das Gatter 17' durch zwei Dioden realisiert, die jeweils in Durchlaßrichtung den Komparatoren 14 und 16 nachgeschaltet sind, wie es innerhalb des Blocks 17' angedeutet ist.

Dem Gatter 17 ist ein Kondensator 23 nachgeschaltet, der bewirkt, daß bei kurzzeitigem Umschalten des Signales So dieses für die Stufe 18 nicht merklich ist.

Die Figuren 4a und 4b zeigen den Verlauf der Signale Us und Ui'. Bei einem Wechsel von Us von "low" nach "high" wird die rechte Seite des Kondensators 20 (siehe Fig. 3), von der das Signal Ui' entnommen wird, in endlicher Zeit, das heißt nur angenähert sprunghaft, auf eine Spannung umgeladen, deren Wert nahe dem der positiven Versorgungsspannung U+ des Steuergerätes 10 ist. Solange Us "high" bleibt, entlädt die rechte Kondensatorseite sich exponentiell über den Widerstand 21 in Richtung auf die Referenzspannung Ur2, die an dem Mittenabgriff des Spannungsteilers entnommen wird.

Die Werte für die Elemente 20, 21 sind derart gewählt, daß innerhalb der Zeiträume th und tl, in denen das Signal Us im Normalbetrieb jeweils "high" bzw. "low" ist, das Signal Ui' den ersten Referenzwert Ur1 nicht unterschreitet bzw. den dritten Referenzwert Ur3 nicht überschreitet. Damit ist im Normalbetrieb während der Zeiträume th das erste Ausgangssignal Ua1 "high" (siehe Fig. 2c) und das dritte Ausgangssignal Ua3 "low" (siehe Fig. 2e).

An dieser Stelle sei angemerkt, daß die senkrechten Hilfslinien der Fig. 4, die gestrichelt, bzw. strichpunktiert gezeichnet sind, folgende Bedeutung haben: die strichpunktierten Linien markieren die Zeitpunkte, zu denen das Signal Us jeweils seinen Zustand ändert. Die gestrichelten Linien markieren diejenigen Zeitpunkte, zu denen das Signal Ui' den zweiten Referenzwert Ur2 jeweils über- bzw. unterschreitet und zu denen das Signal Ua2 seinen Zustand jeweils entsprechend ändert. Dabei sind Gatterlaufzeiten vernachlässigt worden.

Bei einem Wechsel des Signales Us von "high" nach "low" fällt das Signal Ui' mit endlicher Geschwindigkeit auf einen Wert, der nahezu dem des Massepotentials Um entspricht. Der exponentielle Spannungsverlauf an der rechten Kondensatorseite geht wiederum gegen Ur2, wobei jedoch die dritte Referenzspannung Ur3 im Normalbetrieb nicht überschritten wird.

Durch den Verlauf des Signales Ui', wie er in Fig. 2b im Zeitraum to bis t1 dargestellt ist, wird bewirkt, daß immer eines der Ausgangssignale Ua1, Ua2 "high" ist, wenn zunächst vernachlässigt wird, daß bei einem Spannungssprung von Us das Signal Ui' nicht beliebig schnell folgt. Damit ist das Ausgangssignal So des Gatters 17 im Normalbetrieb "high". Da jedoch, wie bereits angedeutet, Ui' nur mit endlicher Geschwindigkeit ansteigt bzw. fällt, ist mit kurzzeitigen Abfällen des Signales So zu rechnen. Diese werden durch den Kondensator 23 jedoch derart geglättet, daß sie für die Stufe 18 nicht merkbar sind und daß auf eine Berücksichtigung der Sprünge in Fig. 4f verzichtet werden kann.

Bei der Realisierung des ODER-Gatters 17' ist zu berücksichtigen, daß während der kurzzeitigen Abfälle seines Ausgangssignales ein Entladen des Kondensators 23 vermieden wird. Das wird beispielsweise erreicht durch die Realisierung des Gatters 17' durch die beiden Dioden, die in dem Block 17' eingezeichnet sind. Es ist weiterhin möglich, eine andere Art von ODER-Gatter zu verwenden, wie es beispielsweise von einem TTL-Gatter realisiert wird. Dann ist jedoch eventuell eine zusätzliche Diode zwischen dem Ausgang des Gatters 17' und dem Kondensator 23 nötig.

Wird der Normalbetrieb zu einem Zeitpunkt t1 verlassen, indem das Signal Us den konstanten "high"-Wert annimmt, so führt der exponentielle Spannungsabfall an der rechten Kondensatorseite zu einem Unterschreiten der ersten Referenzspannung Ur1 zum Zeitpunkt t1'- Daraufhin wird, außer dem dritten Ausgangssignal Ua3, auch das erste Ausgangssignal Ua1 "low" und damit auch das Gatter-Ausgangssignal So. Dieses wird von der Stufe 18 erkannt, die daraufhin die in ihr enthaltene Endstufe derart ansteuert, daß der Motor 13 auf eine Standby-Geschwindigkeit heruntergefahren wird.

Bei einer Betriebsstörung, bei der das Signal Us konstant das Massepotential annimmt, wie es ab einem Zeitpunkt t2 erfolgen soll, fällt Ui' zunächst unter die Werte der beiden Referenzspannungen Ur1, Ur3, wodurch durch das Gatter-Signal So kurzzeitig Normalbetrieb vorgetäuscht wird. Ab einem Zeitpunkt t2' wird jedoch der Referenzwert Ur3 überschritten und es wird eine Betriebsstörung detektiert.

Der Vorteil des Ausführungsbeispiel der Fig. 2 gegenüber dem der Fig. 1 liegt insbesondere darin, daß eine sichere Betriebsüberwachung auch bei unterschiedlichen Betriebsspannungen U+, U+' für das Steuergerät 10 und die Ansteuerstufe 12 besteht. Falls die zweite Referenzspannung Ur2 einen Wert von 2,5 Volt hat und die anderen beiden Referenzspannungen Ur1, Ur3 symmetrisch um diesen Wert herum liegen, so kommt es in Fig. 1 zu Fehlfunktionen, wenn die Betriebsspannung U+ des Steuergerätes 10 beispielsweise 2 Volt oder 10 Volt beträgt und das Steuersignal Us zwischen U+ und Masse getastet wird. Auch bei geringeren Abweichungen der Betriebsspannungen voneinander ist mit Fehlfunktionen bei dem Ausführungsbeispiel nach Fig. 1 zu rechnen, nicht jedoch bei der Schaltung der Fig. 3.

Bei einer Ausgestaltung des Ausführungsbeispiel nach Fig. 3 kann das Laden der rechten Kondensatorseite mittels einer gesteuerten Stromquelle erfolgen. Diese ist beispielsweise direkt zwischen der rechten Kondensatorseite und einer Betriebsspannung, wie U+' oder Masse, geschaltet und kann gesteuert werden durch ein Vergleichssignal, dessen Wert ein Maß ist für die Spannungsdifferenz zwischen der an der rechten Kondensatorseite anliegenden Spannung und einer Sollspannung, wie beispielsweise der zweiten Referenzspannung Ur2. In Abhängigkeit von der Stromquelle und dem genannten Vergleichssignal kann ein gewünschter zeitlicher Spannungsverlauf für die rechte Kondensatorseite eingestellt werden. Dieser kann exponentiell, linear oder gemäß einer sonstigen Funktion verlaufen.

Weitere Versionen der Ausführungsbeispiele können zumindest eine der folgenden Variationen aufweisen:
- das Signal Us kann aufgeteilt werden in ein erstes Signal, das zur Ansteuerung der Stufe 18 dient, und dieser direkt zugeleitet werden kann, und in ein zweites Signal, das zur überwachung des alternierenden Signales Us dient. In diesem Fall ist eine zweite Zuleitung zu der Schaltung 12 nötig, es kann jedoch auf den Komparator 15 verzichtet werden;
- durch geeignete Wahl der Werte für die Referenzspannungen Ur kann nicht nur detektiert werden, wann das Signal Us einen Gleichspannungswert annimmt, sondern es kann auch das überschreiten oder Unterschreiten von vorgegebenen Tastverhältnissen detektiert werden;
- es können mehr als drei Referenzspannungen vorgesehen sein. Dadurch können beispielsweise entsprechende Gleichspannungsanteile detektiert werden und daraufhin können mit nur einer Verbindungsleitung weitere Funktionen in der Schaltung 12 gesteuert werden. Wenn das Signal Us als pulsweitenmoduliertes (PWM-) Signal ausgebildet ist, ist es auch möglich, entsprechende Werte des Taktverhältnisses entsprechend der Anzahl von Referenzspannungen zu detektieren. Das kann zur überwachung des Betriebes eines Verbrauchers, wie des Motors 13, dienen. Es sei an dieser Stelle besonders auf die älteren Anmeldungen P 42 27 761.2, in der die Ermittlung des Wertes eines Stromes beschrieben wird, mit dem ein PWM-Verbraucher angesteuert wird, und auf P 42 29 344.8 verwiesen, in der ein Verbraucher gesteuert wird in Abhängigkeit von einer Temperatur;
- nach einem einmal detektierten Störungsfall kann, falls später ein Normalfall detektiert wird, die Stufe 18 einen nachgeschalteten Verbraucher, wie beispielsweise den Motor 13, von selbst wieder in einen Normalbetrieb steuern oder es kann auch vorgesehen sein, daß dieses erst nach Empfang eines Bestätigungssignals erfolgt, das von nichtdargestellten Mitteln oder durch einen Benutzer des Systems abgegeben wird, dessen Funktion überwacht wird;
- die Ausführungsbeispiele können als Teil eines Videorekorders, eines Compactdisc- (CD-) Spielers oder eines sonstigen Gerätes mit einem Motor eingesetzt werden;
- anstelle eines Gerätes mit Motor können auch Funktionen anderer Geräte bzw. Systeme auf die beschriebenen Arten überwacht werden;
- anstelle einer Funktionsüberwachung kann die Art, wie Steuersignale umgeformt werden in Ui bzw. Ui' und die anschließende Auswertung auch zur Steuerung anderer Funktionen benutzt werden.

## Patentansprüche

1. Verfahren zur Überwachung eines alternierenden Signales (Us) für eine Motoransteuerung, dadurch gekennzeichnet, daß
- das alternierende Signal (Us) derart aufbereitet wird, daß ein aufbereitetes Signal (Ui; Ui') erzeugt wird, dessen zeitlicher Verlauf ein Maß ist für das Taktverhältnis und/oder für einen möglichen Gleichspannungsanteil des alternierenden Signales, daß
- das aufbereitete Signal (Ui; UI') verglichen wird mit mindestens zwei vorgegebenen Referenzwerten (Ur1, Ur3), wodurch entsprechende Vergleichswerte (Ua1, Ua3) erzeugt werden und daß
- aufgrund der Vergleichswerte (Ual, Ua3) auf das Taktverhältnis und/oder auf den Gleichspannungsanteil des alternierenden Signales geschlossen wird, indem die Vergleichswerte (Ua1, Ua3) miteinander EXOR oder ODER verknüpft werden.

2. Verfahren nach Anspruch 1, dadurch gekennzeichnet, daß das alternierende Signal (Us) aufbereitet wird, indem es geglättet wird, wobei das aufbereitete Signal (Ui) einen Gleichspannungsanteil aufweist, dessen Wert ein Maß ist für das Tastverhältnis und/oder den Gleichspannungsanteil des alternierenden Signales (Us), und einen Wechselspannungsteil aufweisen kann mit einer vorgebenen Amplitude, wobei aus dem Wechselspannungsanteil gegebenenfalls das alternierende Signal (Us) regeneriert werden kann (Ua2).

3. Verfahren nach Anspruch 1, dadurch gekennzeichnet, daß das alternierende Signal (Us) aufbereitet wird, indem ein von ihm abgeleitetes Signal derart mit einer Spannung beaufschlagt wird, daß nach einer Spannungsänderung des alternierenden Signals (Us) das abgeleitete Signal mit einem vorgegebenem zeitlichen Verlauf einem vorgegebenen Spannungswert (Ur2) zustrebt.

4. Verfahren nach einem der Ansprüche 1 bis 3, dadurch gekennzeichnet, daß aufgrund der Vergleichssignale (Ua1, Ua3) ein Steuersignal (So) gebildet wird, dessen Wert ein Maß ist für eine mögliche Betriebsstörung.

5. Verfahren nach einem der Ansprüche 1 bis 4, dadurch gekennzeichnet, daß aufgrund der Werte der Vergleichssignale (Ua1, Ua3) Mittel (13), die mit Hilfe des alternierenden Signales gesteuert werden können, in einen Ruhebetrieb (Standbybetrieb) heruntergeregelt werden.

6. Vorrichtung zur Überwachung eines von Generatormitteln (10) erzeugten alternierenden Signales (Us) für eine Motoransteuerung, dadurch gekennzeichnet, daß
- eine Aufbereitungsstufe (11; 20, 21) vorgesehen ist, die das alternierende Signal (Us) derart aufbereitet, daß ein aufbereitetes Signal (Ui; Ui') erzeugt wird, dessen zeitlicher Verlauf ein Maß ist für das Taktverhältnis und/oder für einen möglichen Gleichspannungsanteil des alternierenden Signales, daß
- Vergleichsmittel (14, 16) vorgesehen sind, die das aufbereitete Signal (Ui; UI') vergleichen mit vorgegebenen mindestens zwei Referenzwerten (Ur1, Ur3), wodurch entsprechende Vergleichswerte (Ua1, Ua3) erzeugt werden und daß
- EXOR- oder ODER- Gatter (17, 17') vorgesehen sind, die aufgrund der Vergleichswerte (Ua1, Ua3) auf das Taktverhältnis und/oder auf den Gleichsspannungsanteil des alternierenden Signales schließen.

7. Vorrichtung nach Anspruch 6, dadurch gekennzeichnet, daß die Aufbereitungsstufe Glättungsmittel (11) enthält, die das alternierende Signal (Us) derart glätten, daß das aufbereitete Signal (Ui) einen Gleichspannungsanteil aufweist, dessen Wert ein Maß ist für das Tastverhältnis und/oder den Gleichspannungsanteil des alternierenden Signales (Us), und einen Wechselspannungsteil aufweisen kann mit einer vorgebenen Amplitude, wobei aus dem Wechselspannungsanteil gegebenenfalls das alternierende Signal (Us) regeneriert werden kann (Ua2).

8. Vorrichtung nach Anspruch 6, dadurch gekennzeichnet, daß die Aufbereitungsstufe einen Kondensator (20) aufweist, der mit seinem ersten Anschluß mit dem Generator (10) verbunden ist, daß eine Spannungs- oder Stromvorrichtung (21, 22) vorhanden ist, die den zweiten Anschluß mit einem vorgegebenen Strom auflädt bzw. entlädt, wodurch ein aufbereitetes Signal (Ui') erzeugt wird, das nach einer Spannungsänderung des alternierenden Signals (Us) mit einem vorgegebenem zeitlichen Verlauf einem vorgegebenen Spannungswert (Ur2) zustrebt.

9. Vorrichtung nach einem der Ansprüche 6 bis 8, dadurch gekennzeichnet, daß Auswertemittel (17) aufgrund der Vergleichssignale (Ua1, Ua3) ein Steuersignal (So) bilden, dessen Wert ein Maß ist für eine mögliche Betriebsstörung.

10. Vorrichtung nach einem der Ansprüche 6 bis 9, dadurch gekennzeichnet, daß aufgrund der Werte der Vergleichssignale (Ua1, Ua3) Mittel (13), die mit Hilfe des alternierenden Signales gesteuert werden können, in einen Ruhebetrieb (Standbybetrieb) heruntergeregelt werden.

## Claims

1. Method of monitoring an alternating signal (Us) for a motor control system, characterised in that,
- the alternating signal (Us) is processed in such a way as to produce a processed signal (Ui; Ui') whose timing waveform provides a measure for the duty ratio and/or for a possible dc voltage component of the alternating signal, that
- the processed signal (Ui; Ui') is compared with at least two predetermined reference values (Ur1, Ur3) whereby corresponding comparison values (Ua1, Ua3) are produced and that
- the duty ratio and/or the dc voltage component of the alternating signal is determined on the basis of the comparison values (Ua1, Ua3) in that the comparison values (Ua1, Ua3) are combined with one another using an EXOR or an OR function.

2. Method in accordance with Claim 1, characterised in that, the alternating signal (Us) is processed in that it is smoothed whereby the processed signal (Ui) comprises a dc voltage component whose value provides a measure for the duty ratio and/or for the dc voltage component of the alternating signal (Us) and may comprise an ac voltage part having a predetermined amplitude whereby the alternating signal (Us) can, where necessary, be regenerated (Ua2) from the ac voltage component.

3. Method in accordance with Claim 1, characterised in that, the alternating signal (Us) is processed in that a signal derived therefrom is subjected to a voltage in such a way that, following any change in the voltage of the alternating signal (Us), the derived signal moves towards a predetermined voltage value (Ur2) in a predetermined timely manner.

4. Method in accordance with any of the Claims 1 to 3, characterised in that, a control signal (So), whose value provides a measure for a possible operational fault, is formed on the basis of the comparison signals (Ua1, Ua3).

5. Method in accordance with any of the Claims 1 to 4, characterised in that, means (13), which can be controlled with the aid of the alternating signal, are regulated down to a quiescent operational level (standby mode) on the basis of the values of the comparison signals (Ua1, Ua3).

6. Apparatus for monitoring an alternating signal (Us) for a motor control system which is produced by generator means (10), characterised in that,
- there is provided a processing stage (11; 20, 21) which processes the alternating signal (Us) in such a way as to produce a processed signal (Ui; Ui') whose timing waveform provides a measure for the duty ratio and/or for a possible dc voltage component of the alternating signal, that
- there are provided comparison means (14, 16) which compare the processed signal (Ui; Ui') with at least two predetermined reference values (Ur1, Ur3) whereby corresponding comparison values (Ua1, Ua3) are produced and that
- there are provided EXOR or OR gates (17, 17') which determine the duty ratio and/or the dc voltage component of the alternating signal on the basis of the comparison values (Ua1, Ua3).

7. Apparatus in accordance with Claim 6, characterised in that, the processing stage includes smoothing means (11) which smooth the alternating signal (Us) in such a way that the processed signal (Ui) comprises a dc voltage component whose value provides a measure for the duty ratio and/or the dc voltage component of the alternating signal (Us) and may comprise an ac voltage part having a predetermined amplitude whereby the alternating signal (Us) can, where necessary, be regenerated (Ua2) from the ac voltage component.

8. Apparatus in accordance with Claim 6, characterised in that, the processing stage comprises a capacitor (20) which is connected by its first terminal to the generator (10) and that there is provided a voltage or current device (21, 22) which charges or discharges the second terminal using a predetermined current whereby a processed signal (Ui') is produced, which signal, following any change in the voltage of the alternating signal (Us), moves towards a predetermined voltage value (Ur2) in a predetermined timely manner.

9. Apparatus in accordance with any of the Claims 6 to 8, characterised in that, evaluating means (17) form a control signal (So), whose value provides a measure for a possible operational fault, on the basis of the comparison signals (Ua1, Ua3).

10. Apparatus in accordance with any of the Claims 6 to 9, characterised in that, means (13), which can be controlled with the aid of the alternating signal, are regulated down to a quiescent operational level (standby mode) on the basis of the values of the comparison signals (Ua1, Ua3).

## Revendications

1. Procédé de surveillance d'un signal alternant (Us) destiné à la commande d'un moteur, caractérisé par le fait que
- le signal alternant (Us) est conditionné de façon à générer un signal conditionné (Ui ; Ui') dont la progression dans le temps est une indication du rapport cyclique et/ou d'une éventuelle composante continue du signal alternant, que
- le signal conditionné (Ui ; Ui') est comparé avec au moins deux valeurs de référence prédéfinies (Ur1, Ur3), en produisant ainsi des valeurs comparatives correspondantes (Ua1, Ua3) et que
- le bouclage est effectué sur le rapport cyclique et/ou sur la composante continue du signal alternant en fonction des valeurs comparatives (Ua1, Ua3), en combinant entre elles les valeurs comparatives (Ua1, Ua3) avec une fonction logique EXOR ou OR.

2. Procédé selon la revendication 1, caractérisé par le fait que le signal alternant (Us) est conditionné en le lissant, le signal conditionné (Ui) présentant une composante continue dont la valeur est une indication du rapport cyclique et/ou de la composante continue du signal alternant (Us), et pouvant présenter une composante alternative ayant une amplitude prédéfinie, le signal alternant (Us) pouvant être régénéré (Ua2) le cas échéant à partir de la composante alternative.

3. Procédé selon la revendication 1, caractérisé par le fait que le signal alternant (Us) est conditionné en appliquant une tension à un signal qui lui est dérivé de façon à ce que le signal dérivé se dirige en un temps donné vers une valeur de tension prédéfinie (Ur2) après une modification de la tension du signal alternant (Us).

4. Procédé selon l'une des revendications 1 à 3, caractérisé par le fait que les signaux comparatifs (Ua1, Ua3) sont utilisés pour produire un signal de commande (So) dont la valeur est une indication d'un éventuel défaut de fonctionnement.

5. Procédé selon l'une des revendications 1 à 4, caractérisé par le fait que les valeurs des signaux comparatifs (Ua1, Ua3) servent à amener des moyens (13), lesquels peuvent être commandés à l'aide du signal alternant, en mode repos (mode veille).

6. Dispositif de surveillance d'un signal alternant (Us) généré par des moyens générateurs (10) et destiné à la commande d'un moteur, caractérisé par le fait que
- on prévoit un étage de conditionnement (11 ; 20, 21) qui conditionne le signal alternant (Us) de façon à générer un signal conditionné (Ui ; Ui') dont la progression dans le temps est une indication du rapport cyclique et/ou d'une éventuelle composante continue du signal alternant, que
- on prévoit des moyens de comparaison (14, 16) qui comparent le signal conditionné (Ui ; Ui') avec au moins deux valeurs de référence prédéfinies (Ur1, Ur3), en produisant ainsi des valeurs comparatives correspondantes (Ua1, Ua3) et que
- on prévoit des portes EXOR ou OR qui effectuent sur le rapport cyclique et/ou sur la composante continue le bouclage du signal alternant en fonction des valeurs comparatives (Ua1, Ua3).

7. Dispositif selon la revendication 6, caractérisé par le fait que l'étage de conditionnement contient des moyens de lissage (11) qui lissent le signal alternant (Us) de façon à ce que le signal conditionné (Ui) présente une composante continue dont la valeur est une indication du rapport cyclique et/ou de la composante continue du signal alternant (Us), et peut présenter une composante alternative ayant une amplitude prédéfinie, le signal alternant (Us) pouvant être régénéré (Ua2) si nécessaire à partir de la composante alternative.

8. Dispositif selon la revendication 6, caractérisé par le fait que l'étage de conditionnement présente un condensateur (20) dont la première borne est reliée - au générateur (10), qu'il existe une source de tension ou de courant (21, 22) qui charge ou décharge la deuxième borne avec un courant prédéfini, générant ainsi un signal conditionné (Ui') qui se dirige en un temps donné vers une valeur de tension prédéfinie (Ur2) après une modification de la tension du signal alternant (Us).

9. Dispositif selon l'une des revendications 6 à 8, caractérisé par le fait que les moyens d'évaluation (17) se basent sur les signaux comparatifs (Ua1, Ua3) pour former un signal de commande (So) dont la valeur est une indication d'un éventuel défaut de fonctionnement.

10. Dispositif selon l'une des revendications 6 à 9, caractérisé par le fait que les valeurs des signaux comparatifs (Ua1, Ua3) servent à amener des moyens (13), lesquels peuvent être commandés à l'aide du signal alternant, en mode repos (mode veille).
